# EUROPEAN PATENT SPECIFICATION

(11) **EP 1 693 906 B1**
(45) Date of publication and mention of the grant of the patent: **01.08.2007**
(21) Application number: 05003395.0
(22) Date of filing: 17.02.2005
(51) Int. Cl.: H01L 41/09

(54) **Piezoelectric driving element**
Piezoelektrisches Antriebselement
Elément d'entraînement piézoélectrique

(43) Date of publication of application: 23.08.2006
(73) Proprietor: AGIE SA, 6616 Losone (CH)
(72) Inventor: Fracheboud, Maurice, 1895 Vionnaz (CH); Breguet, Jean-Marc, 1027 Lonay (CH)
(74) Representative: Jacoby, Georg

(56) References cited:
- WO-A-93/19494
- WO-A-99/03160
- DE-A1- 4 023 311
- DE-A1- 19 853 324
- DE-C1- 19 644 550

## Description

### FIELD OF THE INVENTION

The present invention relates to a high-precision driving element for moving a load, and in particular to a high-precision driving element comprising piezoelectric actuators.

### BACKGROUND OF THE INVENTION

Modern science and technology today enables companies to produce items of ever-increasing precision. It becomes possible to realise patterns and forms even on the nanometer scale. Such micro-techniques are employed for producing any number of goods from medical (for example arthroscopic or optical) devices over microchips and a plurality of sensors to individual parts for machines that produce such micro-sized goods. One example of machines that apply high-precision micro-techniques are electric discharge (ED) machines. For instance, they can produce spinnerets intended for manufacturing synthetic fibres or workpieces with a large series of small holes for cooling, or more sophisticated 3D shapes, for instance micromoulds and microstructures.

ED machines use electrical discharges between an electrode and the workpiece to remove material from said workpiece. To achieve precise material removals the ED machines have to rely on driving instruments capable of accurately placing the electrode in a defined distance from the workpiece. As the electrode wears out during the ED process, this driving instrument has to constantly move the electrode for compensating the wear. From the above it becomes clear that such a driving instrument has to meet high demands: it must be able to accurately move the electrode in steps of a precisely defined size. Exigencies raise when micro-sized workpieces are to be produced: the electrodes shrink to a diameter in the range of few 10 micrometers, and the required movements are given in nanometers; only high-precision driving elements can solve these tasks.

But high-precision driving elements are not limited to the use in such applications. They can be used in all kinds of applications where small objects are to be manipulated, e.g. in microscopy or in telepresence.

Conventional driving elements that are able to actuate micro-movements frequently comprise piezoelectric actuators as they exhibit no wear and tear, consume low power, bear heavy loads, have a high resolution and rapid responses, are space-efficient and light-weight.

WO 2004/077584 proposes a piezoelectric actuator for positioning devices which comprises active sections, passive sections and a contact element. The active sections work in the transversal mode in order to perform a push-pull motion that is transferred to the contact element. A slider is loosely placed onto the contact element and can be displaced according to the movements of the active sections. These movements may follow the walking principle, i.e. all active sections move simultaneously in one direction in order to take the slider with them, in the opposite direction they move one by one, while the others hold the slider in position. As a result, the slider moves in one direction. The movements may also apply the stick-slip principle, i.e. in one direction, all active sections move slowly and carry the slider with them, in the other direction they move very fast with the result that the slider does not change its position due to mass inertia.

DE 40 233 11 C2 (US 5,237,238) describes an adjusting device for microscopic movements. A movable element is pressed onto piezoelectric active sections by a pressure applying device, which may be for example a magnet or a spring. The spring may press an active section onto the movable element. All active elements always perform the same shear-mode movements. Movement of the movable element results from actuating the active sections according to the stick-slip principle.

Further, a piezoelectric motor is proposed in WO93/19494, which moves an object in a step-by-step manner. For this, the object is clamped between two rows of piezoelectric actuators that move in accordance with the walking principle.

A driving element according to the preamble of claim 1 is disclosed in DE 198 53 324 A1.

It is an object of the invention to provide a piezoelectric driving element which is capable of moving an object with high accuracy in defined steps.

Another object of the invention is to provide a method for moving an object with high accuracy in defined steps.

It is a further object of the invention to provide a piezoelectric driving element having a simple, low-priced, compact, lightweight and reliable structure.

### SUMMARY OF THE INVENTION

The invention achieves these objects with a piezoelectric driving element according to claims 1 and 13, respectively.

Preferred embodiments of the invention are described in the dependent claims.

According to one aspect of the invention a piezoelectric driving element is provided which comprises a piezoelectric actuator arranged on one side of and in contact with the load and including a plurality of active sections that can be activated individually, and a plurality of passive sections connected to the active sections for synchronous movement with them. The driving element further comprises a plurality of clamping sections each connected to one of the passive sections for synchronous movement with them and arranged to clamp the load independently from each other and to move separately from each other along the longitudinal axis.

These clamping sections are arranged opposite of a contact element of the corresponding passive section such that the load passes between them.

### SHORT DESCRIPTION OF THE DRAWING

Embodiments of the invention will now be described with reference to the accompanying drawing.
Fig. 1 illustrates the principle of the movement of the load;
Fig. 2 shows the movement of the load as a function of time;
Fig. 3 depicts a sectional view in longitudinal direction of an embodiment of the invention;
Fig. 4 depicts a top view onto the same embodiment;
Fig. 5 depicts a sectional view in transverse direction of the same embodiment;
Fig. 6 shows a top view onto the same embodiment omitting the clamping means; and
Fig. 7 illustrates an application of the invention.

### DETAILED DESCRIPTION OF THE DRAWINGS

Before describing the drawings in detail, there will be given some explanatory remarks.

A piezoelectric driving element according to the invention is constructed to move a load, which is in some embodiments a wire, for example an electrode wire, and in some other embodiments a longish rod, along a longitudinal axis. In general, the invention is directed to loads having an arbitrary form with two parallel plane surfaces. The term "longitudinal axis" merely designates the axis along which the load moves and is not intended to limit the moving direction to a particular axis of the load, for example the longitudinal axis of an elongated load.

Movement of the load results from the movements of the piezoelectric active sections that are part of the piezoelectric actuator. In a preferred embodiment, these active sections work in a longitudinal mode, wherein they extend and contract in parallel to the longitudinal axis. In other embodiments the active elements work in the transversal mode or any other mode known in the art. The contact between the piezoelectric actuator and the load is provided by a contact element. The contact elements may be formed as flat, robust legs or as thin rods that are rigidly .. connected to the passive sections. The surface of the contact elements is such as to provide for a sliding of the load onto the contact elements. Each active section comprises one passive element which is preferably positioned between the active section it belongs to and the active section adjacent thereto. As a result, active and passive sections are arranged successively into a row. In a further embodiment the contact elements are disposed on the active elements.

In most embodiments the piezoelectric actuator is supported by its two ends. The actuation sections in these embodiments are connected in a way that allows displacing of the boundaries between two adjacent active sections. In an embodiment comprising active sections that work in the longitudinal mode their boundaries are longitudinally shifted in dependence of the state of these sections. If the two outer ends of the piezoelectric actuator are fixed, the same number of active sections have to be extended and contracted at all times.

The clamping means are used to fix the load on the active sections. In some embodiments, the clamping means press the load onto the passive section, at right angle to the load surface or oblique thereto; in other embodiments they hold the load from two sides like a clothes-pin and thereby prevent its unintentional shifting. The clamping means may in some embodiments be permanent or electric magnets that fix a (magnetic) load; or they may comprise springs that apply their force onto the load.

The clamping sections are connected with the passive sections they belong to in order to guarantee synchronised movements between them. As a consequence of said connection each clamping section moves separately from the other clamping sections when the active sections move accordingly. Thus, the distances between the clamping sections vary. This forbids rigid connections between the clamping sections: in some embodiments they are flexibly connected to each other, in other embodiments there is no connection between them.

In a further embodiment each clamping section presses the load onto the contact element of the passive section it belongs to, and the clamping section is rigidly fixed to the passive element. The contact element/clamping section pair will slide along the load when a force greater than the holding force (which results from pressing the load onto the contact element by means of the clamping section) is applied to the load. Thus, the driving element applies the walking principle comprising step-like movements and omits the need for a second row of active sections with the load being clamped between the two rows of active sections, and is therefore simpler and more cost-effective in comparison to the prior art driving elements.

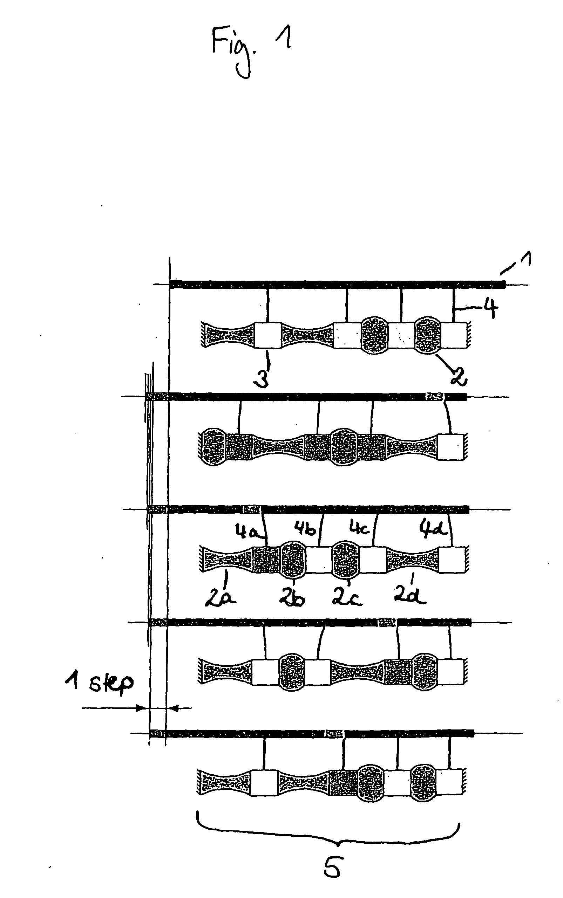

To go back now to Fig. 1, there is shown a diagram illustrating the driving principle of moving a load 1. The elongated piezoelectric actuator 5 shown in Fig. 1 includes four active sections 2 which work in the longitudinal mode. Four passive sections 3 which carry the load 1 are interposed between the active sections 2 and appended to the right end of the rightmost active section 2d. Both ends of the piezoelectric actuator 5 are affixed to a support which is merely schematically depicted. Also schematically depicted as lines 4 connected to the passive sections 3 are clamping sections 4a-d which clamp the load 1 to the passive sections 3. All clamping sections 4a-d exert the same clamping force onto the load 1.

Fig. 1 illustrates five stages of a one-step-movement of the load 1 to the left.

In a first stage, the two leftmost active sections 2a, 2b are extended, and the other two rightmost active sections 2c, 2d are contracted.

In a second stage, active section 2a is contracted, whereas active section 2d is extended. As indicated by the lines at the left side of Fig. 1, the load 1 has been moved one big step to the left as a result of the net friction force exerted by the clamping sections 4a-d. The three leftmost clamping sections 4a-c together exert a higher total friction force (three-time higher) onto the load 1 than the rightmost clamping section 4d. As the active section 2d lying in between the adjacent clamping sections 4c, d is extended, the clearance between them increases by sliding clamping section 4d along the load 1 to the right (the grey region of the load 1 indicates the sliding region, its length corresponds to the increase of the clearance). As the clamping sections 4a-d are not completely rigid along the longitudinal direction a small restoring force is build up within the clamping section 4d acting rightwards onto the load 1. This restoring force is compensated by the total restoring force of the three clamping sections 4a-c acting to the left as disproportionately indicated by the curved lines.

In a third stage, active section 2a is extended, whereas active section 2b is contracted. The load 1 has been moved one small step to the right, since now the clamping sections 4b-d exert the higher total friction force onto the load 1 trying to hold the same in position. Thus, clamping section 4a slides along the load 1 to the right, at the same time trying to pull the load 1 a first small step to the right. Furthermore, since only the restoring forces of clamping sections 4b, c remain for compensation of the one of clamping section 4d, the load 1 is moved a second small step to the right. These two effects add together to the above mentioned small step of the load 1 to the right as illustrated on the left side of Fig. 1.

In a fourth stage, active section 2c is extended, whereas active section 2d is contracted. Thus, clamping sections 4a, b, d try to hold the load 1 in position, whereas the restoring force of clamping section 4c, now only compensated by the one of clamping section 4b, together with the sliding force of section 4c move the load 1 one small step to the right.

In a fifth stage, active section 2b is extended and active section 2c is contracted, trying to hold the load 1 in position due to the friction forces of clamping sections 4a and d and moving the load 1 one small step to the right due to the restoring and sliding forces of clamping sections 4c and b, respectively. The fifth stage corresponds to the first stage, with the load 1 being moved to the left one big step equal to the sum of the first big leftward step (between first and second stage) and the three small rightward steps (between the second and fifth stage).

Thus, the amount of the total leftward movement may be varied by adjusting the clamping forces of the clamping sections 4a-d. Higher clamping forces lead to a smaller leftward movement, but enable the piezoelectric actuator 5 to hold the load 1 against a stronger force externally applied thereto in the longitudinal direction. In every stage the total length of the piezoelectric actuator 5 is kept constant by only extending one active section 2 and contracting another one while keeping the two others unchanged.

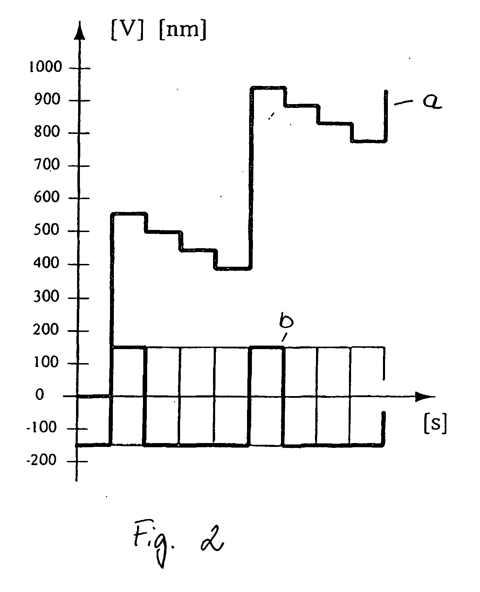

Fig. 2 shows the movement of the load 1 as a function of time for a specific clamping force which is equal for all clamping sections 4a-d. Function a represents the excursion of the load 1, whereas function b represents the voltage applied to actuator 2a for causing its contraction (a positive voltage of maximum peak keeps the active section 4a fully contracted, whereas a negative voltage of the same amount keeps it fully extended). Similar voltage changes are applied to the other active sections 2b-d during different time intervals as shown by the thinner lines in Fig. 2.

While in Fig. 2 rectangular voltage pulses are shown to be applied to the actuators, other embodiments of the invention may use different pulse forms, e.g. trapezoidal pulses. For the specific case of having the piezo-electric element fixed at its both ends, it is required that the sum of the voltages applied to the single actuators remains constant.

The rising edge of a positive voltage pulse applied to active section 2a signalises the beginning of a step cycle, the transition between the first and second stages as described above. The applied voltage causes a forward movement of the load 1 by about 550 nm. The falling edge of this positive pulse coinciding with the rising edge of the voltage pulse applied to active section 2b corresponds to the transition between the second and third stages, the load 1 is hereby pulled backwards by about 60 nm. In the subsequent two transitions from the third to fourth and fourth to fifth stages the backwards movements are repeated, yielding a total backwards movement of about 180 nm. As a result, the net movement in the forward direction amounts to about 370 nm. As shown herewith, a high resolution can be achieved by adopting a driving element according to the invention. By changing parameters of the driving element (extension and contraction lengths of the active sections 2a-d by varying the voltages applied thereto or the lengths of the active sections, clamping forces of the clamping sections 4a-d, etc.), the forward and backward movements of the load 1 can both be reduced or increased. In some embodiments of the invention, the parameters are chosen such that any backward movements of the load 1 are reduced to a minimum.

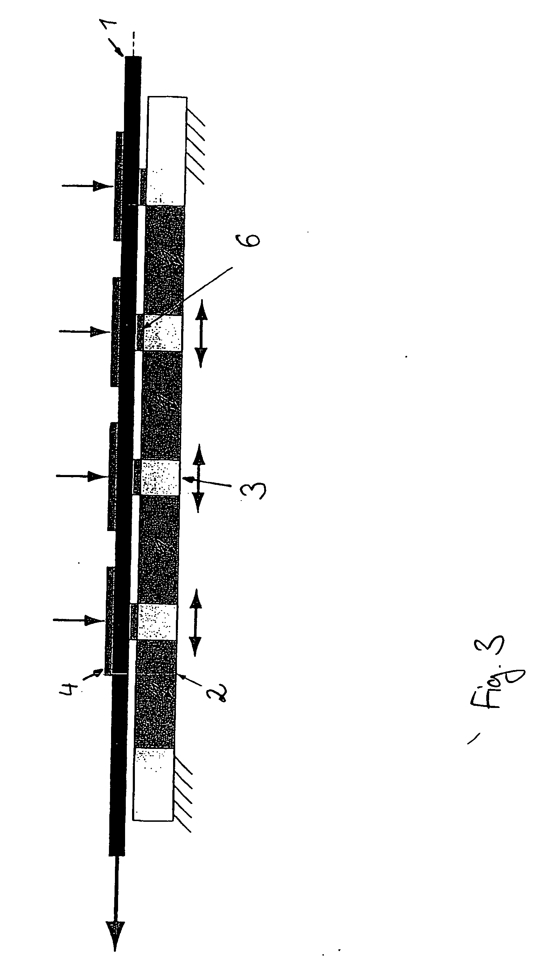

Fig. 3 is a sectional view in longitudinal direction of the piezoelectric actuator 5. As indicated by the arrows below the passive elements 3, they can be displaced in both directions in reaction to an extension or contraction of the active sections 4. The left and right ends of the piezoelectric actuator 5 are fixed to a support (not shown). The direction of motion may be inverted at any time, simply by inverting the extension and contraction sequence of the active sections 2a-d. The load can be moved in both directions, for instance it may be fed and retracted over a determined distance.

Attached onto the passive sections 3 are contact elements 6 including a contact surface with a specific friction coefficient which together with the clamping force of the corresponding clamping section 4 defines the holding force. The load 1 is pressed onto the contact surface of the contact elements 6 by means of the clamping force of the clamping sections 4 (this force is shown by the vertical arrows). The contact elements 6 are arranged such that the area of contact to the load 1 extends along the overall length of each contact element 6 along the longitudinal direction. Moreover, the area of contact of the clamping sections 4 overlaps the active sections 2 on both sides of the corresponding passive section 3 lying in between. The clearance between adjacent clamping sections 4 is just sufficient to allow for their movement relative to each other.

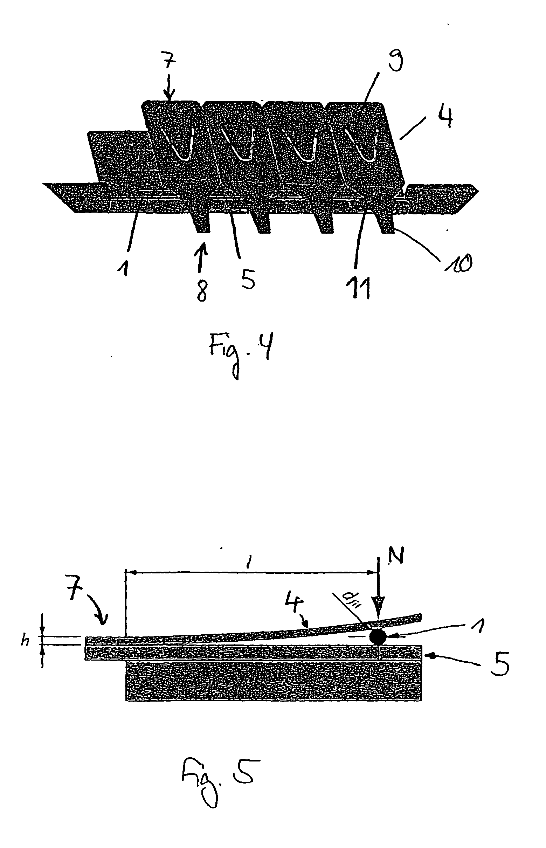

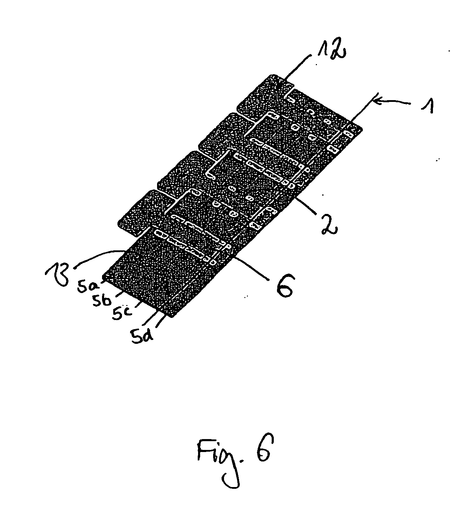

Fig. 4 is a top view onto the structure of the clamping sections 4. The distal portions 7 of the four clamping sections 4 might be connected to each other by flexible bridges (not shown) which on the one hand still allow the proximal portions 8 of the clamping sections 4 to separately move relative to each other along the longitudinal axis and on the other hand facilitate the attachment of the clamping sections 4 to the piezoelectric actuator 5 during fabrication. The proximal portion 8 of each clamping section 4 has a cross-like form, with its top end 10 protruding over the piezoelectric actuator 5. The top ends 10 enable the introduction of the load 1 into the driving element. For this, a lifting mechanism (not shown) engages underneath the top end 10 and lifts it up in order to allow the load 1 to be pushed between the contact elements 6 and the clamping sections 4. Cross-beams 11 of the proximal portions 8 work as guiding wings which prevent the load 1 to be pushed in perpendicular direction off the piezoelectric actuator 5 due to the clamping forces acting in an oblique direction to the load 1 (see Fig. 5). For this, the wings of the cross-beam 11 are slightly inclined towards the piezoelectric actuator 5, wherein their edges facing the load 1 abut against the same.

In this embodiment, each clamping section 4 is build in form of a leaf spring with a v-shaped cut-out 9 punched into its bulk material. The cut-out 9 increases elasticity of the leaf spring in upward direction. Elasticity is adjusted by varying the relation of the distance between the two legs of the v-form in vicinity of their ends relative to the width of the clamping sections 4. Rigidity in longitudinal direction is maximised by minimising the width of the cut-out 9. Such a maximum rigidity is desired in order to enable sliding of the one clamping section 4 over the load 1 instead of having it flexed in longitudinal direction and increasing its restoring force. The sliding is essential for moving the load 1 into longitudinal direction. All clamping sections 4 might be cut from a unitary plate of an electrical isolating or non-isolating material, such as metal.

Fig. 5 is a sectional view of the embodiment shown in Fig. 4. It illustrates the clamping force of one clamping section 4 pressing the load 1 onto the corresponding contact element 6. The distal portion 7 of the clamping section 4 is attached to a portion of the upper surface of the contact element 6 which in turn is attached with its entire lower surface to the entire upper surface of the passive section 3 of the piezoelectric actuator 5. The distal portion 7 of the clamping section 4 ranges from the distal end of the clamping section 4 to the ends of its v-shaped cut-out 9. As can be seen from Fig. 5, the clamping force applied onto load 1 is not perpendicular to the piezoelectric actuator 5 due to the non-zero diameter d of the load 1 and the thus induced bending of the leaf spring into a non-planar form. Therefore, the guiding wings 11 as shown in Fig. 4 are necessary to prevent the load 1 from shifting to the right. The leaf spring is bent over a length 1 which extends between the ends of the v-shaped cut-out 9 and the position of the load 1.

Due to the restoring force of the leaf spring which is proportional to the bending of the leaf spring, the normal force N effective on the load 1 increases when the diameter d of the load 1 increases. This is advantageous, because the greater the load diameter is, the stronger the normal force applied onto the load must be to hold it in its position.

Fig. 6 is a top view onto the piezoelectric actuator 5, in which the clamping means 4 are omitted for better illustration of the structure of the actuator 5. The contact elements 6 are T-shaped plates, with their upper parts 12 sized such that they can be strongly connected to the distal portion 7 of a clamping section 4. The lower surfaces of the t-shaped contact elements 6 are attached to portions of the upper surface of the piezoelectric actuator 5 which are not covered by electrodes. Electrodes are formed on portions of the upper surface which lie between the aforementioned uncovered portions. The piezoelectric actuator 5 is made from a single piezoelectric plate with the electrodes provided on its both surfaces in a manner to form the passive and active sections 3 and 2. The plate is cut through in regular intervals parallel to the longitudinal axis in order to divide the piezoelectric actuator 5 into four sub-actuators 5a-d. These cuts 13 decrease the out of the plane bending of the piezoelectric actuator 5 due to its undesired but unavoidable extension and contraction in transverse direction that accompanies its movements in longitudinal direction. In other embodiments of the invention, the plate is cut through in irregular intervals, thereby dividing the piezoelectric actuator 5 in sub-actuators 5a-d of varying width.

In some embodiments of the invention, the piezo-electric actuator 5 is made out of several piezoelectric plates instead of a single one.

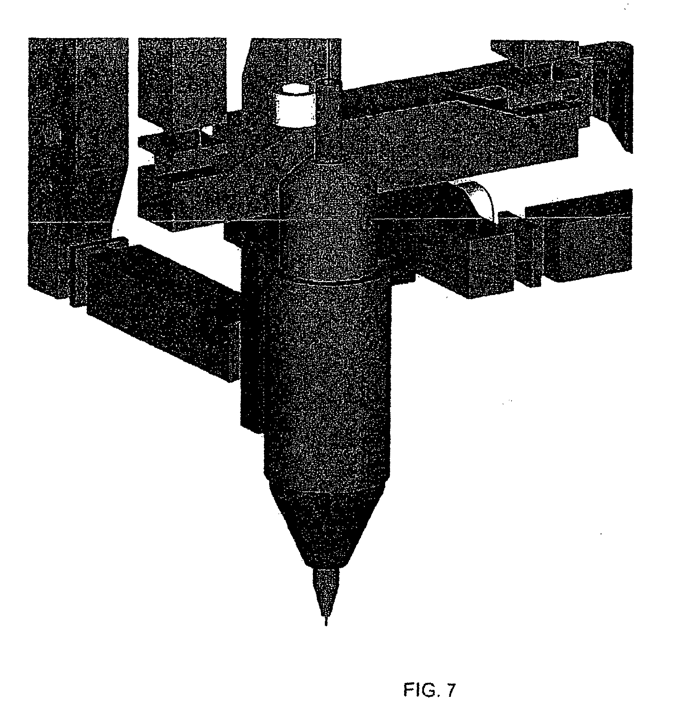

Fig. 7 shows a fine positioning device as described in EP 1 113 191 which might be used in an electric discharge machine (EDM) to position an elongated electrode in X/Y- and Z-direction over a working piece to be machined. The electrode is fed forward by the driving element according to the invention. The transmission unit is designed for precisely machining small work pieces. A driving element in accordance with the invention is for example able to feed an electrode having a diameter of 50 to 2000 micrometer with a typical feeding velocity of 1 mm/s and to built a holding force of about 0.5 N while having a total size of 40x10x10 mm.

## Claims

1. Piezoelectric driving element for moving a load (1) along a longitudinal axis, comprising:
a piezoelectric actuator (5) arranged on one side of and in contact with the load (1) and including a plurality of active sections (2) that can be activated individually, and a plurality of passive sections (3) connected to the active sections (2) for synchronous movement with them;
the system further comprising:
a plurality of clamping sections (4) each connected to one of the passive sections (3) for synchronous movement with them and arranged to clamp the load (1) independently from each other and to move separately from each other along the longitudinal axis, wherein each passive section (3) comprises a contact element (6) for contacting the load (1), and **characterised in that** each clamping section (4) is arranged opposite of the contact element (6) such that the load (1) passes in between them.

2. Driving element of claim 1, wherein the clamping sections (4) exclusively consists of passive elements for applying a clamping force onto the load (1).

3. Driving element of claim 1 or 2, wherein the clamping sections (4) comprise springs.

4. Driving element of claim 3, wherein the springs are leaf springs.

5. Driving element of claim 4, wherein the leaf springs include a V-shaped cut-out (9).

6. Driving element of claims 3, 4 or 5, wherein the spring is configured such that the normal force applied by the spring onto the load (1) increases when the diameter of the load (1) increases.

7. Driving element of one of the preceding claims, wherein the clamping sections (4) comprise lifting means (10) to lift the clamping sections (4) from the load (1).

8. Driving element of one of the preceding claims, wherein the clamping sections (4) comprise guiding wings (6) to prevent the load (1) from shifting perpendicularly to the longitudinal axis.

9. Driving element of one of the preceding claims, wherein the piezoelectric actuator (5) is made from a piezoelectric bulk material that is electroded in such to provide for the active and passive sections (2,3) successively along the longitudinal axis.

10. Driving element of one of the preceding claims, wherein the active sections (2) are working in the longitudinal mode, with the longitudinal mode extending in parallel to the longitudinal axis.

11. Driving element of claim 9 or 10, wherein the piezoelectric actuator (5) is divided parallel to the longitudinal axis into several sub-actuators.

12. Driving element of one of the preceding claims, comprising a support, wherein the piezoelectric actuator (5) includes first and second ends in longitudinal direction of the load (1) which are fixed to the support.

13. Driving method for moving a load (1) along a longitudinal axis, comprising the steps of:
individually actuating a plurality of active sections (2) of a piezoelectric actuator (5) which is arranged on one side of and in contact with the load (1) and further includes a plurality of passive sections (3) connected to the active sections (2) for synchronous movement with them;
contacting the load (1) by means of contact elements (6) wherein each passive section comprises a contact element (6); and further comprising the steps of:
independently clamping the load (1) by means of a plurality of clamping sections (4), which are respectively connected to one of the passive sections (3) for synchronous movement with them and arranged to move separately from each other along the longitudinal axis, and which are **characterised in that** they are arranged opposite of the contact elements (6) such that the load (1) passes in between them.

14. Driving method of claim 13, wherein the active sections (2) are actuated in such that the load (1) moves stepwise, wherein one step comprises one forward step and several backward steps, with said one forward step being greater than the several backward steps together.

15. Driving method of claim 14, wherein the number of backward steps performed in one step corresponds to the number of active sections (2) minus one.

## Patentansprüche

1. Piezoelektrisches Antriebselement zum Bewegen einer Last (1) entlang einer Längsachse, umfassend:
einen auf einer Seite von und in Kontakt mit der Last (1) angeordneten piezoelektrischen Aktor (5), umfassend eine Vielzahl individuell aktivierbarer aktiver Abschnitte (2) und eine Vielzahl passiver Abschnitte (3), die für eine mit den aktiven Abschnitten (2) synchrone Bewegung mit diesen verbunden sind;
wobei das System außerdem umfaßt:
eine Vielzahl von Halteabschnitten (4), die jeweils mit einem der passiven Abschnitte (3) verbunden sind, um eine synchrone Bewegung mit diesen zu erreichen, und die so angeordnet sind, daß sie die Last (1) unabhängig voneinander halten und sich getrennt voneinander entlang der Längsachse bewegen können, wobei jeder passive Abschnitt (3) ein Kontaktelement (6) zum Kontaktieren der Last (1) umfaßt, **dadurch gekennzeichnet, daß** jeder Halteabschnitt (4) gegenüber dem Kontaktelement (6) angeordnet ist, so daß die Last (1) zwischen ihnen verläuft.

2. Antriebselement nach Anspruch 1, bei dem die Halteabschnitte (4) ausschließlich aus passiven Elementen zum Ausüben einer Haltekraft auf die Last (1) bestehen.

3. Antriebselement nach Anspruch 1 oder 2, bei dem die Halteabschnitte (4) Federn umfassen.

4. Antriebselement nach Anspruch 3, bei dem die Federn Blattfedern sind.

5. Antriebselement nach Anspruch 4, bei dem die Blattfedern einen V-förmigen Ausschnitt (9) umfassen.

6. Antriebselement nach einem der Ansprüche 3, 4 oder 5, bei dem die Feder so ausgebildet ist, daß die von der Feder auf die Last (1) ausgeübte Normalkraft sich erhöht, wenn sich der Durchmesser der Last (1) erhöht.

7. Antriebselement nach einem der vorangehenden Ansprüche, bei dem die Halteabschnitte (4) Anhebemittel (10) zum Anheben der Halteabschnitte (4) von der Last (1) umfassen.

8. Antriebselement nach einem vorangehenden Ansprüche, bei dem die Halteabschnitte (4) Führungsflügel (6) zum Verhindern einer zur Längsachse senkrechten Verschiebung der Last (1) umfassen.

9. Antriebselement nach einem der vorangehenden Ansprüche, bei dem der piezoelektrische Aktor (5) aus einem piezoelektrischen Material hergestellt ist, das derartig mit Elektroden versehen ist, daß sich die aktiven und passiven Abschnitte (2, 3) aufeinanderfolgend entlang der Längsachse bilden.

10. Antriebselement nach einem der vorangehenden Ansprüche, bei dem die aktiven Abschnitte (2) nach dem Längseffekt arbeiten, wobei sich der Längseffekt parallel zur Längsachse ausdehnt.

11. Antriebselement nach Anspruch 9 oder 10, bei dem der piezoelektrische Aktor (5) parallel zur Längsachse in mehrere Unteraktoren aufgeteilt ist.

12. Antriebselement nach einem der vorangehenden Ansprüche, das einen Träger umfaßt, wobei der piezoelektrische Aktor (5) ein erstes und ein zweites Ende in Längsrichtung der Last (1) umfaßt, die jeweils am Träger befestigt sind.

13. Antriebsverfahren zum Bewegen einer Last (1) entlang einer Längsachse, umfassend die folgenden Schritte:
unabhängiges Aktivieren einer Vielzahl von aktiven Abschnitten (2) eines piezoelektrischen Aktors (5), der auf einer Seite von und in Kontakt mit der Last (1) angeordnet ist und außerdem eine Vielzahl von passiven Abschnitten (3) umfaßt, die für eine mit den aktiven Abschnitten (2) synchrone Bewegung mit diesen verbunden sind;
Kontaktieren der Last (1) mit Kontaktelementen (6), wobei jeder passive Abschnitt ein Kontaktelement (6) umfaßt;
und das außerdem die folgenden Schritte umfaßt:
unabhängiges Halten der Last (1) mit einer Vielzahl von Halteabschnitten (4), die jeweils mit einem der passiven Abschnitte (3) verbunden sind, um eine mit diesen synchrone Bewegung zu erreichen, und die so angeordnet sind, daß sie sich getrennt voneinander entlang der Längsachse bewegen können, **dadurch gekennzeichnet, daß** die Halteabschnitte (4) gegenüber den Kontaktelementen (6) derart angeordnet sind, daß die Last (1) zwischen ihnen verläuft.

14. Antriebsverfahren nach Anspruch 13, bei dem die aktiven Abschnitte (2) derart angetrieben werden, daß sich die Last (1) schrittweise bewegt, wobei ein Schritt einen Vorwärtsschritt und mehrere Rückwärtsschritte umfaßt, wobei der Vorwärtsschritt größer als die mehrere Rückwärtsschritte zusammen ist.

15. Antriebsverfahren nach Anspruch 14, wobei die Anzahl der in einem Schritt ausgeführten Rückwärtsschritte der Anzahl der aktiven Abschnitte (2) minus Eins entspricht.

## Revendications

1. Elément d'entraînement piézoélectrique pour déplacer une charge (1) le long d'un axe longitudinal, comprenant :
un actionneur piézoélectrique (5) disposé sur un côté de, et en contact avec, la charge (1) et comprenant une pluralité de sections actives (2) qui peuvent être activées individuellement, et une pluralité de sections passives (3) connectées aux sections actives (2) en vue du mouvement synchrone avec celles-ci ;
le système comprenant en outre :
une pluralité de sections de serrage (4), chacune étant connectée à une des sections passives (3) en vue du mouvement synchrone avec celles-ci, et disposée pour serrer la charge (1) indépendamment les unes des autres et pour se déplacer séparément les unes des autres le long de l'axe longitudinal, dans lequel chaque section passive (3) comprend un élément de contact (6) pour contacter la charge (1), et **caractérisé en ce que** chaque section de serrage (4) est disposée à l'opposé de l'élément de contact (6) de telle sorte que la charge (1) passe entre eux.

2. Elément d'entraînement selon la revendication 1, dans lequel les sections de serrage (4) sont exclusivement composées d'éléments passifs pour appliquer une force de serrage sur la charge (1).

3. Elément d'entraînement selon la revendication 1 ou 2, dans lequel les sections de serrage (4) comprennent des ressorts.

4. Elément d'entraînement selon la revendication 3, dans lequel les ressorts sont des ressorts à lames.

5. Elément d'entraînement selon la revendication 4, dans lequel les ressorts à lames comprennent une découpe en forme de V (9).

6. Elément d'entraînement selon les revendications 3, 4 ou 5, dans lequel le ressort est configuré de telle sorte que la force normale appliquée par le ressort sur la charge (1) augmente lorsque le diamètre de la charge (1) augmente.

7. Elément d'entraînement selon une des revendications précédentes, dans lequel les sections de serrage (4) comprennent des moyens de levage (10) pour relever les sections de serrage (4) de la charge (1).

8. Elément d'entraînement selon une des revendications précédentes, dans lequel les sections de serrage (4) comprennent des ailes de guidage (6) pour empêcher la charge (1) de se déplacer perpendiculairement à l'axe longitudinal.

9. Elément d'entraînement selon une des revendications précédentes, dans lequel l'actionneur piézoélectrique (5) est formé d'une masse piézoélectrique qui est électrodée de manière à fournir les sections actives et passives (2, 3) successivement le long de l'axe longitudinal.

10. Elément d'entraînement selon une des revendications précédentes, dans lequel les sections actives (2) fonctionnent en mode longitudinal, avec le mode longitudinal s'étendant parallèlement à l'axe longitudinal.

11. Elément d'entraînement selon la revendication 9 ou 10, dans lequel l'actionneur piézoélectrique (5) est divisé parallèlement à l'axe longitudinal en plusieurs sous-actionneurs.

12. Elément d'entraînement selon une des revendications précédentes, comprenant un support dans lequel l'actionneur piézoélectrique (5) comprend des premières et des secondes extrémités dans la direction longitudinale de la charge (1), lesquelles sont fixées au support.

13. Procédé d'entraînement pour déplacer une charge (1) le long d'un axe longitudinal, comprenant les étapes suivantes :
actionnement individuel d'une pluralité de sections actives (2) d'un actionneur piézoélectrique (5) qui est disposé sur un côté de, et en contact avec, la charge (1), et comprend en outre une pluralité de sections passives (3) connectées aux sections actives (2) en vue du mouvement synchrone avec celles-ci ;
contact de la charge (1) au moyen des éléments de contact (6), dans lequel chaque section passive comprend un élément de contact (6) ;
et comprenant en outre les étapes suivantes :
serrage individuel de la charge (1) au moyen d'une pluralité de sections de serrage (4) qui sont respectivement connectées à une des sections passives (3) en vue du mouvement synchrone avec celles-ci, et disposées pour se déplacer séparément les unes des autres le long de l'axe longitudinal, et qui sont **caractérisées en ce qu'**elles sont disposées à l'opposé des éléments de contact (6) de sorte que la charge (1) passe entre celles-ci.

14. Procédé d'entraînement selon la revendication 13, dans lequel les sections actives (2) sont actionnées de sorte que la charge (1) se déplace par étapes, dans lequel une étape comprend une étape de marche avant et plusieurs étapes de marche arrière, avec ladite une étape de marche avant étant supérieure aux plusieurs étapes de marche arrière regroupées.

15. Procédé d'entraînement selon la revendication 14, dans lequel le nombre d'étapes de marche arrière réalisé en une étape correspond au nombre de sections actives (2) moins une.
